# EUROPEAN PATENT SPECIFICATION

(11) **EP 2 867 129 B1**
(45) Date of publication and mention of the grant of the patent: **29.11.2017**
(21) Application number: 12732823.5
(22) Date of filing: 26.06.2012
(51) Int. Cl.: B65D 21/02, B65D 23/10, B29C 49/20, B65D 23/12

(54) **STACKABLE BOTTLE**
STAPELBARE FLASCHE
BOUTEILLE EMPILABLE

(43) Date of publication of application: 06.05.2015
(73) Proprietor: RPC Promens Innocan BVBA, 2030 Antwerpen (BE)
(72) Inventor: GYSEN, August, B-2000 Antwerp (BE); COPPERS, Luc, B-9990 Maldegem (BE); CAP, Alain, B-2540 Hove (BE)
(74) Representative: Philippaerts, Yannick
(86) International application number: PCT/EP2012/062390
(87) International publication number: WO 2014/000776

(56) References cited:
- EP-A1- 1 510 319
- EP-A1- 2 292 519
- WO-A-2010/059044
- WO-A1-01/62612
- FR-A1- 2 755 668
- JP-A- 7 205 997
- JP-A- 8 217 075
- US-A- 101 483
- US-A1- 2003 148 050
- US-A1- 2004 056 053

## Description

The present invention relates to a set comprising a first and a second stackable bottle, each bottle being made of a material such that the bottle can be made by blow-molding, each bottle having a bottle neck, a shoulder part, a sidewall part, a base part and a handle, the base part comprising a central base part and a peripheral base part, wherein said central base part comprises a recess that is dimensioned such that the recess of the first bottle surrounds the bottle neck of the second bottle in a stacked position in which the shoulder part of the second bottle lies against the peripheral base part of the first bottle. Further, each bottle is provided with an indentation in an upper segment of the sidewall part. The invention further relates to a stackable bottle from such a set.

EP2292519, describes a stackable bottle with a handle mounted around the neck of the bottle. Thereby, the bottle neck, bottle cap and the handle are, in the stacked position, surrounded by the recess in the central base part. The handle is placed at the neck of the bottle thereby enabling an ergonomic handling of the bottle, particularly when pouring out fluid from the bottle. A user can pour out fluid from the bottle by holding the bottle with one hand at the handle (which is near the top), and the other hand at the bottom of the bottle, thereby holding the bottle in a stable way while being perfectly able of balancing the bottle to control the flow of fluid poured out of the bottle. Ergonomically, this manner of holding a bottle while pouring out fluid from the bottle has proven to be preferred.

A drawback of the known stackable bottle and handle is that the recess in the bottom part of the bottle takes a lot of space and requires more material to be used to manufacture the bottle, because the bottle needs to have a predetermined strength also at the more complexly shaped bottom.

WO01/62612 discloses a bottle for a water dispenser. The bottle is stackable and comprises a handle formed by a recess. This document also discloses the further features of the preamble of claim 1. JP8217075 discloses a bottle with a gripper connected to the outside wall of the bottle.

It is an object of the present invention to provide a stackable bottle with a handle that has an optimized shape, and a set of such bottles. To this end, each bottle in the set according to the invention is characterized in that a handle is mounted in the indentation in a substantially horizontal position, wherein the handle comprises two connectors which are connected to the bottle at a distance from one another, and a gripper part which is mounted between the connectors. The result of the handle not being positioned around the neck is that the recess in the bottom part of the bottle does not need to enclose the handle of the underlying bottle in a stacked position. This allows the recess to be designed with a smaller diameter. Furthermore the neck of the bottle can be dimensioned shorter, because no extra space must be provided for fitting a handle around the neck. This at its turn allows the recess to be less deep. The combination of these advantages results in the recess at the bottom part becoming significantly smaller when the handle is not positioned around the neck of the bottle. Because the recess is significantly smaller, less material is to be used to blow-mold the bottle resulting in a gain in weight and in cost. Tests have shown that the indentation in the sidewall, wherein the handle is arranged, takes less space than the space that is gained by the smaller recess. This has been furthermore theoretically substantiated because the handle being rotatably mounted at the neck has as a result that the recess should enclose, additional to the handle, the longer bottle neck and the handle in each position. Placing the indentation at an upper segment of the sidewall provides to the user a tool for ergonomically carrying and ergonomically pouring out of the bottle. Particularly in pouring out the bottle, the horizontal position of the handle proves to be better than for example a vertical position of the handle.

The connectors and the gripper part being separate pieces, whereby the connectors are connected to the bottle, has advantages in the manufacturing process. For example one type of connector can be used for smaller and larger bottles, the smaller bottles having a smaller gripper and the larger bottles having a larger gripper, both the smaller and the larger gripper being connected to one type of connector. Furthermore, it is easier when blow-molding a bottle to connect connectors to the bottle, than to connect a complete handle to the bottle because this element (connector or complete handle) must be (partially) positioned inside the mold during the blow-molding process. Positioning and holding only the connectors in the mold during blow-molding, and not the complete handle, is significantly simpler and therefore an advantage.

Mounting the gripper between two connectors is an easy way to fix the gripper in a predetermined position. As described above, it proves to be advantageous that the handle is in the horizontal position. In this regard, mounting the gripper between two connectors, which are located at distance from one another and at the same height in the bottle, has as a result that the gripper part is automatically horizontally positioned.

Preferably, the material such that the bottle can be made by blow-molding is polyethylene terephthalate. Polyethylene terephthalate is the most used blow-molding material for bottles. This material proved to be cost-efficient and relatively easy to recycle.

Preferably, the indentation and the handle are configured such that in a stack position the complete handle extends within the indentation. Thereby, the handle does not extend from the indentation and consequently the handle does not extend from the bottle's theoretical outer surface (being the outer surface as it would be without indentation). This allows adjacent bottles to be placed closely against each other, thereby allowing an efficient stacking, storing and transporting of the bottles. It will be clear in this regard that the handle can extend from the bottle in a 'none stack position' of the bottle. The handle could be provided with a resilient element that, in a compressed mode completely extends within the indentation, and in a released state, extends from the indentation. In such an example, the compressed state is considered as stack position.

Preferably, the indentation and handle are provided in the side wall part directly adjacent the shoulder part of the bottle. This position in the side wall part, directly adjacent shoulder part, thereby in the highest segment of the side wall part, not only proves to be ergonomically the preferred position for the handle, but also provides advantages in terms of manufacturing. In the process of blow-molding, a plastic perform is arranged inside the mold. This plastic perform typically has a height that is significantly smaller than the final height of the bottle. The preform is stretched by applying pressure and a predetermined temperature, to form the bottle. Thereby, the lower parts of the bottle are formed by the lower parts of the preform, while the higher parts of the bottles are formed by the higher parts of the preform. Because the pre-form is initially positioned at the top of the mold, the pre-form is typically stretched from top to bottom. This has as a result that the top part of the bottle typically contains more material than the lower parts of the bottle as these lower parts are more stretched than the top parts. Therefore providing the indentation and the handle in the highest segment of the side wall, directly adjacent the shoulder part, has as a result that more material is used to form this indentation, so that the required strength of the bottle can be guaranteed. This required strength is particularly relevant because the handle is connected in the indentation, the handle should be able to resist the forces transmitted to the bottle when carrying the bottle.

Preferably, each connector is balloon-shaped with an opening for mounting the gripper part, whereby the balloon-shaped connector is surrounded by said material so that the connector is rigidly connected to the bottle at the outer side of the bottle. A balloon-shaped connector being placed inside a mold at the manufacturing of a blow-molded bottle, has as a result that the material from the preform forming the bottle will stretch around the connector thereby encapsuling the connector in the bottle material. This balloon-shaped connector thereby becomes surrounded by the bottle material, preventing this balloon to be pulled away from the bottle. The opening, which is provided to mount the gripper part, can also be used in the manufacturing process for holding the connector in place when the bottle is blow-molded. In this context, it will be understood that the material surrounding the balloon-shaped connector does not mean that the balloon is completely surrounded and encapsuled in the material, but is surrounded for a large part so that the balloon cannot escape from the bottle.

Preferably, the female part is formed by the blind hole having larger inner dimensions at the blind end than at the open end of the hole so that the opening is suitable for snap-fit connection with a male part of the mechanical connection mechanism. A female part of a mechanical connection mechanism being formed inside the connector makes it easy to mount the gripper part. A fast and cheap way of connecting two elements is via snap-fit connection, whereby a male element snap-fits in a female opening thereby forming a mechanical connection. Alternatively, inner thread can be provided in the blind hole.

Preferably, the connector comprises a bulge at one end of the balloon-shape to obtain a pear-shaped connector, the opening being located at the bulge. By providing the bulge, the material forming the bottle is given more space to curl around the connector, so that the connector becomes firmly trapped within the material of the bottle.

Preferably, the opening is formed along a longitudinal axis of the pear-shaped element. Providing the opening along the longitudinal axis of the pear-shaped element results in a symmetrically formed connector which is simple in form and therefore easy to produce and handle.

Some embodiments of the present invention are now described, by way of example only, and with reference to the accompanying drawings, in which:
figure 1 shows a side view of part of a set of two stackable bottles with handle in the stacked position;
figure 2 shows a front view of the upper part of a stackable bottle with handle;
figure 3 shows a person pouring out fluid from a stackable bottle with handle;
figure 4 shows a mold with a blow-molded stackable bottle with connector;
figure 5 shows different types of connectors;
figure 6 shows a top view of an indentation and a handle mounted between two connectors; and
figure 7 illustrates the steps for blow-molding a bottle with connector.

In the drawings the same or similar elements have the same reference numerals.

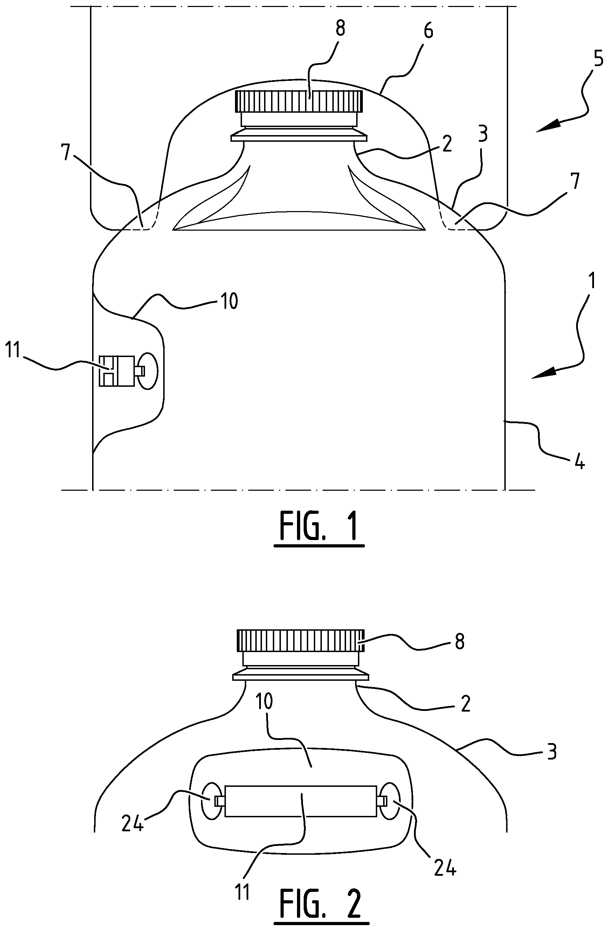

Figure 1 shows a bottle 1 which is produced linear-symmetrical about a longitudinal axis. The bottle 1 from top to bottom along the longitudinal axis comprises an optional bottle cap 8, a bottle neck 2, a shoulder part 3, a sidewall part 4 and a base part 5. Preferably the bottle 1 is produced by means of blow molding from a material which can be blow molded, preferably polyethylene terephthalate (PET). An alternative material which allows the bottle 1 to be produced by means of blow molding is polylactic acid (PLA). The bottle 1 according to the invention furthermore comprises a handle 11.

The bottle cap 8 is preferably attached to the bottle neck 2 by means of a screw connection, wherein the bottle cap 8 and bottle neck 2 have corresponding screw threads. However other systems such as click systems can also be used to attach the bottle cap 8 to the neck 2. The bottle neck 2 furthermore preferably comprises a collar which makes it possible to grip the bottle 1 in a simple manner, in particular during blow molding of the bottle 1.

The shoulder part 3 of the bottle 1 joins the bottle neck 2 with the sidewall part 4 of the bottle 1. For this reason the shoulder part 3 extends mainly in a radial direction and downward out from the bottle neck 2 which has a first diameter, to transform into the sidewall part 4 of the bottle 1 which has a larger diameter than said first diameter. This gives a slightly curved, mainly flat top surface at said shoulder part 3, on which a further bottle 1 can be stacked. Although the term diameter is mainly used to describe round elements, the preferred shape of the bottle according to the invention is square with rounded edges (when looking at the bottle from the top down). The square shape of the bottle enhances the stackability. Square bottles can be more efficiently stacked. The rounded edges allow the bottle to be produced via blow-molding.

The base part 5 of the bottle 1 closes the sidewall part 4 at the lower edge so that the bottle 1 is suitable for containing a fluid. The base part 5 of the stackable bottle 1 according to the invention comprises two parts, namely a peripheral base part 7 and a central base part. The peripheral base part 7 extends mainly radially out in relation to the longitudinal axis so as to form a largely flat lower surface which can stand stable on a flat floor surface.

Figure 1 shows a part of a set of a first bottle and a second bottle in a stacked position, wherein the upper bottle is shown in cross section. The central base part contains a recess 6 which is dimensioned such that the bottle 1 can be stacked. In a stacked position a shoulder part 3 of the lower bottle lies against a peripheral base part 7 of an upper bottle. Figure 1 shows how the bottle neck 2 and bottle cap 8 extend centrally and higher than the shoulder part 3 of the bottle 1. To make it possible, in a stacked position with a lower bottle and an upper bottle, for a peripheral base part 7 of the upper bottle to lie against a shoulder part 3 of the lower bottle, in the base of the upper bottle is provided a cavity which is large enough to hold the bottle neck 2 and bottle cap 8. For this reason, a recess 6 is provided a central base part 6 which functions as a cavity as described above. The dimensions of the recess 6 are defined such that they can surround the bottle neck 2 and bottle cap 8 of the lower bottle in the stacked position.

Figure 1 shows an indentation 10 in a top segment of the sidewall part 4 of the bottle 1. In this indentation, a handle 11 is provided. Thereby the handle 11 and the indentation 10 are configured so that a person is able to grab with his hand, without significant effort, between a gripper part of the handle and the indentation 10, for example by providing an opening between the handle and bottle 1 material at the location of the gripper part. Alternatively, the handle can be provided with a resilient part so that the handle lays substantially against the bottle material when the resilient part is in rest and so that the handle can be pulled away from the bottle material by applying a tension to the resilient part.

Preferably the top surface of the shoulder part 3 and the bottom surface of the peripheral base part 7 have a complementary relief with rises and dips which fit in each other and which preferably extend radially, so that after stacking, rotation of one bottle 1 in relation to the other is hindered. Preferably the rise and dip are made in the bottle 1 without varying the material thickness. As a result the bottle 1 can be produced with a rise and dip worked into the base 5 and shoulder part 3 simply by blow molding.

Figure 2 shows the indentation 10 and the handle 11 from the front while figure 1 shows the indentation 10 and the handle 11 in cross-section from the side. Figure 2 shows the handle 11 mounted between two connectors 24 provided in the indentation 10 in the sidewall portion 4 of the bottle 1. The connectors 24 are arranged at substantially the same height in the bottle (considering the bottle in an upright position). Such arrangement provides in a rigid connection and firm horizontal positioning of the handle in the bottle indentation 10.

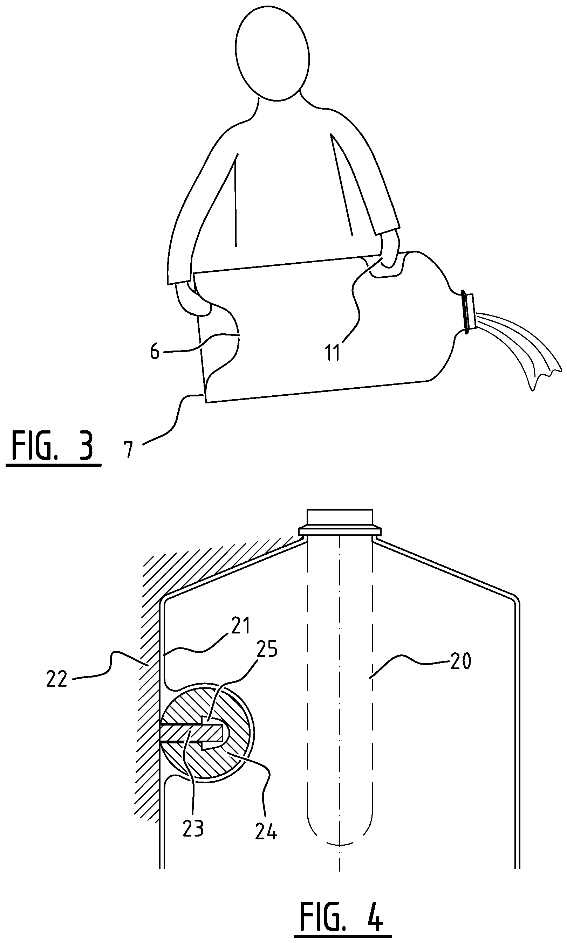

Figure 3 shows a person pouring out fluid from a stackable bottle with handle according to the invention. With one hand, the person grabs the handle and with the other hand, the person grabs the bottom part 5 of the bottle 1. Because the bottom part 5 comprises a recess 6 in the central part thereof, the person can grab with his fingers in the recess thereby having a better grip on the bottle. Because the handle is positioned in the horizontal position (considering the bottle in an upright position), a person pouring out fluid from the bottle can hold the bottle in a straight and balanced manner. The person does not need to twist his arm or hand to grab the bottle. Furthermore, the handle is located in an upper segment of the sidewall part 4 of the bottle 1. This maximizes the distance between the handle 1 and the bottom part 5 of the bottle. Because this distance is maximized, a good control can be obtained when pouring out fluid from the bottle 1. This specific combination of the horizontal handle, the handle being located in an upper segment of the sidewall, and the recess in the bottom part of the bottle, allows a user to carry such bottle 1, and to pour out fluid from such bottle 1 in a manner which is ergonomically superior to existing bottles with different handle designs.

Figure 4 shows a mold provided for blow-molding a bottle. The figure shows a preform 20 in dotted lines positioned inside the mold. The inner shape of the mold is defined by the mold body 22. By applying pressure to the preform 20 (at a predetermined temperature), the preform material will stretch and be 'blown' outward toward the mold body 22 thereby forming a bottle 21 having a shape which corresponds with the inner shape of the mold body 22.

Figure 4 shows how the mold body 22 is provided with a pin 23 extending inward from the inner side of the mold 22. A sphere-shaped connector 24 is placed over the pin 23. As a result, when blow-molding a bottle, the preform 20 material will curl around the connector thereby laying against over 50% of the connector's outer surface. Because the material lays against more than 50% of the connectors outer surface, preferably over 60% of the connector's souter surface, more preferably over 70% of the connector's outer surface, the connector is trapped within the material 21 forming the bottle. The outer surface of the bottle 21 is curled around the connector 24 so that the connector 24 is rigidly connected to the bottle at the outer side of the bottle.

The connector 24 comprises two parts which are preferably integrally formed with one another, the first part being the bottle material contacting part, and the other part being the external element mounting part. The bottle material contacting part is defined by most of the outer surface of the connector body. This outer surface is preferably balloon-shaped, containing no sharp edges at the bottle material contacting part. The external element mounting part is formed by only a small part of the outer surface of the connector body, the small part comprising an opening preferably formed as a blind hole extending inward in the connector body. This small part may comprise sharp edges.

The blind hole is preferably provided with female mechanical connection means such as inner screw-thread or with a varying inner diameter where the blind end of the blind hole has larger inner dimensions than the open end of the blind hole.

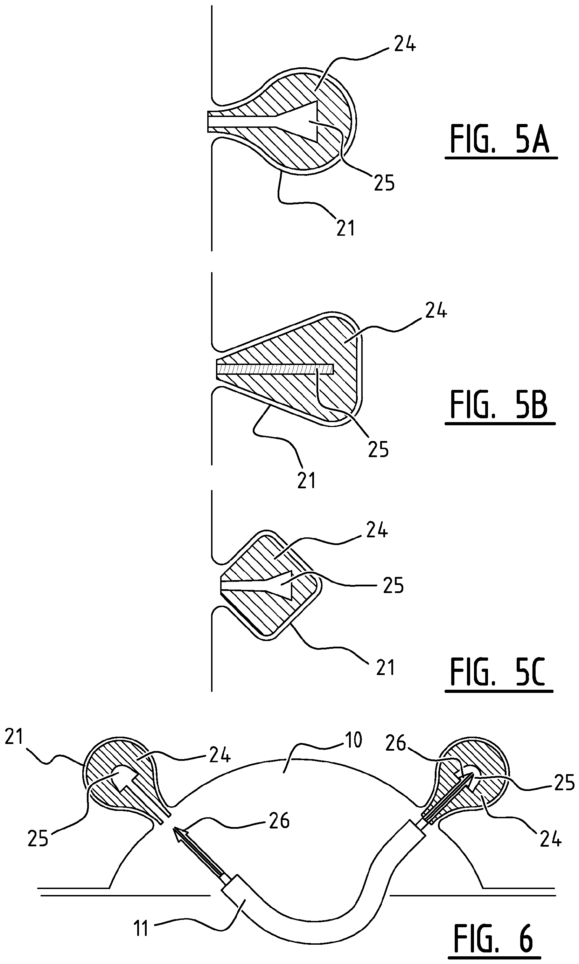

Figure 5 shows three connectors each having a different outer shape. All shapes shown in figure 5 and figure 4 are all considered balloon-shapes. In the invention, a balloon-shape is defined as a three-dimensional shape largely defined by rounded surfaces optionally combined with flat surfaces (largely rounded so that the shape does not show sharp edges). Figure 4 shows a balloon-shape which is substantially sphere shaped. In figure 5a, the sphere has a bulge at one end thereof thereby forming a pear-shaped balloon. The opening is located at the bulge, and the blind hole preferably extends around the rotational axis of the pear-shaped connector. Figure 5b shows an alternative pear-shaped connector being in the form of a triangle with rounded edges. Figure 5c shows yet another alternative of the balloon-shaped connector being a square with rounded edges (thereby showing a combination of rounded surfaces and flat surfaces). The connector in figure 4 and the connector in figure 5c have their center of gravity substantially in the middle of the connector. Figure 5a and figure 5b show connectors having a pear-shape, whereby the center of gravity is somewhat shifted out of the middle of the connector away from the opening in the connector. The latter is preferred over a central center of gravity because it provides more room for the bottle material to curl around the connector.

For rigidly connecting the connector to the bottle, the connector is trapped in the outer shape of the bottle material. To this end the bottle material surrounds the connector, meaning that the bottle material should lay against the connector outer surface also behind the widest point of the connector, thereby gripping the connector in the bottle material. In a connector where the center of gravity is not in the middle, the bottle material laying against less than 50% of the connector surface can be enough to connect the connector to the bottle. However preferably, the bottle material lays against more than 50%, more preferably more than 60%, most preferably more than 70% of the connector's outer surface.

Figure 5b shows a connector with a blind hole being provided with inner thread whereas figure 4, figure 5a and figure 5c shows an inner hole with a larger dimension at the blind end of the hole than at the open end of the hole so that an external element can be locked in the blind hole.

Figure 6 shows the indentation with handle from figure 1 and 2 in a top view. Two connectors 24 are provided at the indentation and at the distance of one another. Between the two connectors 24 a handle 11 can be mounted. The handle comprises male mechanical connection elements 26, in figure 6 being snap-fit connections providing for snap-fitting in the blind hole 25 in the connector body. By snap-fitting the gripper part of the handle 11 in the connector 24, the handle completely extends within the indentation 10 so that no part of the handle extends out of the outer bottle surface. The bottle material 21 is curved around the connectors 24 thereby trapping the connectors in the bottle material so that a force can be exerted on the connectors.

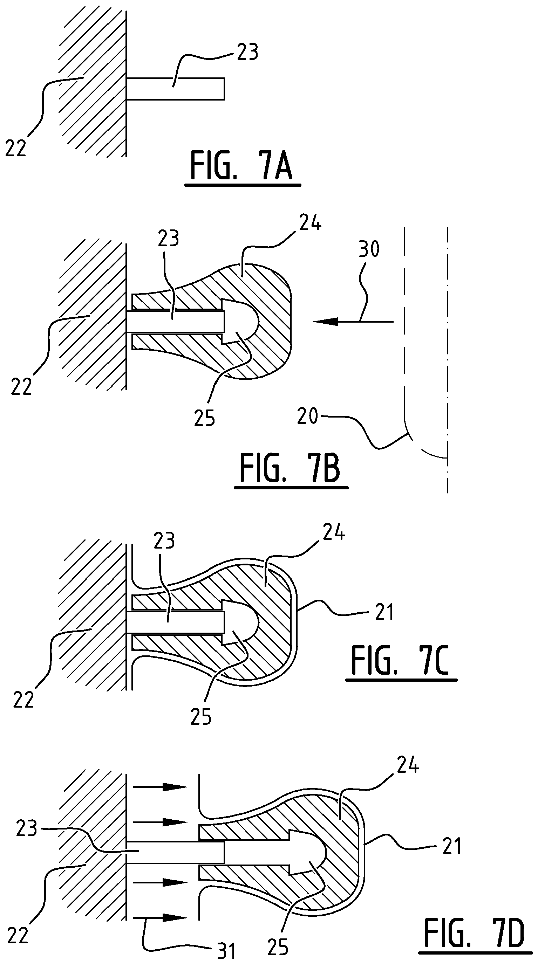

Figure 7 shows the different steps in the molding process. Figure 7a shows a mold body 22 with a pin 23 extending from the inner surface of the mold. In a first step, a preform 20 is inserted in the mold and a connector 24 is slid with its opening 25 over the pin 23 in direction 30. Thereby the connector is positioned in the mold. This is shown in figure 7b. Figure 7c shows how the preform is stretched and curled around the connector 24 to lay against over 70% of the connector's surface, so that the bottle 21 is formed in the mold 22. In a further step, shown in figure 7d, the mold is opened and the bottle 21 with the connector 24 is slid over the pin 23 and out of the mold 22 in direction 31.

Other ways of holding a connector inside a mold can also be provided. However the pin 23 is preferred because by sliding the opening 25 of the connector 24 over the pin 23, the opening is of the connector is positioned so that it is reachable from the outside when the bottle 1 is produced. Therefore this method is preferred over other methods.

Preferably a bottle 1 according to the invention has a capacity of more than 5 litres, more preferably more than 10 litres, most preferably more than 15 litres. Preferably a bottle 1 according to the invention has a capacity of less than 35 litres, more preferably less than 30 litres, most preferably less than 25 litres.

The present description further provides full support for following definitions which do not form part of the invention defined in the claims :
1. A bottle being made of a material such that the bottle can be made by blow-molding, the bottle comprising a connector for connecting an external element to the bottle, the connector being balloon-shaped and having an opening for mounting the external element, whereby the balloon-shaped connector is surrounded by said material in such a manner that the connector is rigidly connected to the bottle.
2. Bottle according to definition 1, wherein the material is polyethylene terephthalate.
3. Bottle according to definition 1 or 2, wherein the opening is formed as a blind hole comprising a female part of a mechanical connection mechanism.
4. Bottle according to definition 3, wherein the female part is formed by the blind hole having larger inner dimensions at the blind end than at the open end of the hole so that the opening is suitable for snap-fit connection with a male part of the mechanical connection mechanism.
5. Bottle according to any one of the definitions 1-4, wherein the balloon-shaped connector is substantially sphere-shaped.
6. Bottle according to any one of the definitions 1-4, wherein the connector comprises a bulge at one end of a balloon-shape to obtain a pear-shaped connector, the opening being located at the bulge.
7. Bottle according to definition 6, wherein the opening is formed along a longitudinal axis of the pear-shaped element.
8. Bottle according to any one of the definitions 1-7, wherein the connector is formed at a sidewall of the bottle.
9. Bottle according to any one of the definitions 1-8, wherein the external element is a gripper part mountable to the connector to form a handle to the bottle.
10.Bottle according to any one of the definitions 1-9, wherein two connectors are provided and whereby a gripper part is mounted between the two connectors to form a handle.
11. Method for blow-molding a bottle according to any one of the definitions 1-10, comprising the steps of:
   - providing a mold with a connector holder;
   - providing a bottle pre-form in the mold;
   - connecting a balloon-shaped connector to the connector holder;
   - forming the bottle by applying a predetermined pressure to the preform at a predetermined temperature;
   - ejecting the bottle and connector from the mold.
12. Method according to definition 11, wherein the connector holder is a pin extending from the inner wall of the mold and wherein the step of providing a connector in the mold comprises sliding a connector with its opening over the pin.

## Claims

1. Set comprising a first and a second stackable bottle, each bottle (1) being made of a material such that the bottle can be made by blow-molding, each bottle having a bottle neck (2), a shoulder part (3), a sidewall part (4), a base part (5) and a handle (11), the base part comprising a central base part and a peripheral base part (7), wherein said central base part comprises a recess (6) that is dimensioned such that the recess of the first bottle surrounds the bottle neck of the second bottle in a stacked position in which the shoulder part of the second bottle lies against the peripheral base part of the first bottle, wherein each bottle is provided with an indentation (10) in an upper segment of the sidewall part, **characterized in that** the handle (11) is mounted in the indentation (10) in a substantially horizontal position, wherein the handle comprises two connectors (24) which are connected to the bottle (1) at a distance from one another, and a separate gripper part which is mounted between the connectors (24).

2. Set according to claim 1, wherein the material such that the bottle can be made by blow-molding is polyethylene terephthalate.

3. Set according to claim 1, wherein the indentation (10) and the handle (11) are configured such that in the stacked position the complete handle extends within the indentation.

4. Set according to any one of the previous claims, wherein the indentation (10) and the handle (11) are provided in the sidewall part directly adjacent the shoulder part (3) of the bottle.

5. Set according to any one of the previous claims, wherein the connectors (24) are balloon-shaped with an opening for mounting the gripper part, whereby the balloon shape is surrounded by said material of the bottle (1) in such a manner that the connectors (24) are rigidly connected to the bottle.

6. Set according to claim 5, wherein the opening is formed as a blind hole comprising a female part of a mechanical connection mechanism.

7. Set according to claim 6, wherein the female part is formed by the blind hole having larger inner dimensions at the blind end than at the open end of the hole so that the opening is suitable for snap-fit connection with a male part of the mechanical connection mechanism.

8. Set according to any one of the claims 5-7, wherein each balloon-shaped connector (24) is substantially sphere-shaped.

9. Set according to any one of the claims 5-8, wherein each connector (24) comprises a bulge at one end of the balloon-shape to obtain a pear-shaped connector, the opening being located at the bulge.

10. Set according to claim 9, wherein the opening is formed along a longitudinal axis of the pear-shaped element.

11. Set according to any one of the previous claims, wherein each bottle (1) has a capacity greater than 5 liters, preferably greater than 10 liters, more preferably greater than 15 liters, and a capacity less than 35 liters, preferably less than 30 liters, more preferably less than 25 liters.

12. Stackable bottle (1) with a handle from a set according to any one of the preceding claims.

## Patentansprüche

1. Satz, der eine erste und eine zweite stapelbare Flasche aufweist, wobei jede Flasche (1) aus einem Material hergestellt ist, so dass die Flasche durch Blasformen hergestellt werden kann, wobei jede Flasche einen Flaschenhals (2), einen Schulterteil (3), einen Seitenwandteil (4), einen Basisteil (5) und einen Griff (11) hat,
wobei der Basisteil einen zentralen Basisteil und einen Umfangsbasisteil (7) hat, wobei der zentrale Basisteil eine Aussparung (6) aufweist, die derart dimensioniert ist, dass die Aussparung der ersten Flasche den Flaschenhals der zweiten Flasche in einer gestapelten Position, in welcher der Schulterteil der zweiten Flasche an dem Umfangsbasisteil der ersten Flasche anliegt, umgibt, wobei jede Flasche mit einer Einkerbung (10) in einem oberen Abschnitt des Seitenwandteils versehen ist, **dadurch gekennzeichnet, dass** der Griff (11) in einer im Wesentlichen horizontalen Position in die Einkerbung (10) montiert ist, wobei der Griff zwei Verbinder (24), die in einem Abstand voneinander mit der Flasche (1) verbunden sind, und einen getrennten Greiferteil, der zwischen die Verbinder (24) montiert ist, aufweist.

2. Satz nach Anspruch 1, wobei das Material, so dass die Flasche durch Blasformen hergestellt werden kann, Polyethylenterephthalat ist.

3. Satz nach Anspruch 1, wobei die Einkerbung (10) und der Griff (11) derart aufgebaut sind, dass sich in der gestapelten Position der gesamte Griff innerhalb der Einkerbung erstreckt.

4. Satz nach einem der vorhergehenden Ansprüche, wobei die Einkerbung (10) und der Griff (11) in dem Seitenwandteil direkt benachbart zu dem Schulterteil (3) der Flasche bereitgestellt sind.

5. Satz nach einem der vorhergehenden Ansprüche, wobei die Verbinder (24) ballonförmig mit einer Öffnung zum Montieren des Greiferteils sind, wodurch die Ballonform von dem Material der Flasche (1) in einer derartigen Weise umgeben wird, dass die Verbinder (24) starr mit der Flasche verbunden werden.

6. Satz nach Anspruch 5, wobei die Öffnung als ein Blindloch ausgebildet ist, das einen aufnehmenden Teil eines mechanischen Verbindungsmechanismus aufweist.

7. Satz nach Anspruch 6, wobei der aufnehmende Teil durch das Blindloch ausgebildet ist, das an dem blinden Ende größere Innenabmessungen als an dem offenen Ende des Lochs hat, so dass die Öffnung für die Schnappverbindung mit einem aufzunehmenden Teil des mechanischen Verbindungsmechanismus geeignet ist.

8. Satz nach einem der Ansprüche 5 - 7, wobei jeder ballonförmige Verbinder (24) im Wesentlichen kugelförmig ist.

9. Satz nach einem der Ansprüche 5 - 8, wobei jeder Verbinder (24) eine Wölbung an einem Ende der Ballonform aufweist, um einen birnenförmigen Verbinder zu erhalten, wobei die Öffnung an der Wölbung angeordnet ist.

10. Satz nach Anspruch 9, wobei die Öffnung entlang einer Längsachse des birnenförmigen Elements ausgebildet ist.

11. Satz nach einem der vorherigen Ansprüche, wobei jede Flasche (1) eine Kapazität von mehr als 5 Litern, vorzugsweise mehr als 10 Litern, besonders bevorzugt mehr als 15 Litern aufweist, sowie eine Kapazität von weniger als 35 Litern, vorzugsweise weniger als 30 Litern, besonders bevorzugt weniger als 25 Litern.

12. Stapelbare Flasche (1) mit einem Griff aus dem Set nach einem der vorherigen Ansprüche.

## Revendications

1. Ensemble comprenant une première et une deuxième bouteille empilables, chaque bouteille (1) étant faite d'un matériau tel que la bouteille peut être moulée par soufflage, chaque bouteille comportant un goulot (2), une partie épaulement (3), une partie paroi latérale (4), une partie base (5) et une poignée (11), la partie base comprenant une partie base centrale et une partie base périphérique (7), dans lequel ladite partie base centrale comprend un évidement (6) dimensionné de telle sorte que l'évidement de la première bouteille entoure le goulot de la deuxième bouteille dans une position empilée dans laquelle la partie épaulement de la deuxième bouteille repose contre la partie base périphérique de la première bouteille, dans lequel une encoche (10) est prévue sur chaque bouteille dans un segment supérieur de la partie paroi latérale, **caractérisé en ce que** la poignée est montée dans l'encoche (10), dans une position sensiblement horizontale, dans lequel la poignée comprend deux liaisons (24) qui sont connectées à la bouteille (1) à distance l'une de l'autre, et une partie de préhension séparée qui est montée entre les liaisons (24).

2. Ensemble selon la revendication 1, dans lequel le matériau tel que la bouteille peut être moulée par par soufflage est du polyéthylène téréphtalate.

3. Ensemble selon la revendication 1, dans lequel l'encoche (10) et la poignée (11) sont configurées de telle sorte que, dans la position empilée, la poignée complète s'étend à l'intérieur de l'encoche.

4. Ensemble selon l'une quelconque des revendications précédentes, dans lequel l'encoche (10) et la poignée (11) sont prévues dans la partie paroi latérale directement adjacente à la partie épaulement (3) de la bouteille.

5. Ensemble selon l'une quelconque des revendications précédentes, dans lequel les liaisons (24) sont en forme de ballonnets pourvus d'une ouverture pour le montage de la partie préhension, moyennant quoi la forme en ballonnet est entourée par ledit matériau de la bouteille (1) de telle manière que les liaisons (24) sont raccordées à la bouteille de façon rigide.

6. Ensemble selon la revendication 5, dans lequel l'ouverture est formée comme un trou borgne comprenant une partie femelle d'un mécanisme de raccordement mécanique.

7. Ensemble selon la revendication 6, dans lequel la partie femelle est formée par le trou borgne qui a des dimensions intérieures plus grandes à l'extrémité borgne qu'à l'extrémité ouverte du trou, de telle sorte que l'ouverture est appropriée à une connexion par encliquetage avec une partie mâle du mécanisme de raccordement mécanique.

8. Ensemble selon l'une quelconque des revendications 5 à 7, dans lequel chaque liaison en forme de ballonnet (24) est sensiblement en forme de sphère.

9. Ensemble selon l'une quelconque des revendications 5 à 8, dans lequel chaque liaison (24) comprend un renflement à une extrémité de la forme en ballonnet afin d'obtenir une liaison en forme de poire, l'ouverture se situant au niveau du renflement.

10. Ensemble selon la revendication 9, dans lequel l'ouverture est formée le long d'un axe longitudinal de l'élément en forme de poire.

11. Ensemble selon l'une quelconque des revendications précédentes, dans lequel chaque bouteille (1) a une capacité supérieure à 5 litres, de préférence supérieure à 10 litres, plus préférablement supérieure à 15 litres, et une capacité inférieure à 35 litres, de préférence inférieure à 30 litres, plus préférablement inférieure à 25 litres.

12. Bouteille empilable (1) avec poignée provenant d'un ensemble selon l'une quelconque des revendications précédentes.
